# EUROPEAN PATENT APPLICATION

(11) **EP 4 645 249 A1**
(43) Date of publication of application: **05.11.2025**
(21) Application number: 24172938.3
(22) Date of filing: 29.04.2024
(51) Int. Cl.: G06V 10/25, G06V 20/58

(54) **THREE-DIMENSIONAL ANNOTATION OF TRAFFIC MANAGEMENT OBJECTS**

(71) Applicant: aiMotive Kft., 1025 Budapest (HU)
(72) Inventor: KUNSÁGI-MÁTÉ, Sándor, 2462 Martonvásár (HU); MATUSZKA, Tamás, 1063 Budapest (HU)
(74) Representative: Valvoda, Jakob

(57) **Abstract**

The disclosure refers to a computer-implemented method for annotating traffic management objects in three-dimensional (3D) space. The method includes obtaining a plurality of image frames, at least some of the image frames including two-dimensional (2D) bounding boxes of traffic management objects, and each image frame associated with position and orientation data, localizing centers of 3D bounding boxes of traffic management objects using the plurality of image frames including the 2D bounding boxes, and the respective position and orientation data, for each localized center of a 3D bounding box of a traffic management object, calculating an extent and orientation of the 3D bounding box based on image frames including the 2D bounding box of the traffic management object, for each 3D bounding box of a traffic management object, projecting the 3D bounding box on image frames associated with the traffic management object, generating a plurality of 2D image cutouts of traffic management objects based on the projected 3D bounding boxes, and training at least one model to classify traffic management objects in the plurality of 2D image cutouts. Furthermore, a method of generating a training dataset, and corresponding devices are disclosed.

## Description

### TECHNICAL FIELD

The present invention relates to annotation of traffic management objects in three-dimensional (3D) space and generation of training datasets. In particular, the present invention relates to a method for automatic annotation of traffic management objects in 3D space, a method for generating a training dataset, respective computer-readable media, devices, and systems.

### BACKGROUND

Traffic on roads is typically controlled and managed by traffic management objects. These objects play a pivotal role in ensuring the safe and efficient operation of vehicles by regulating traffic flow, providing necessary warnings, and guiding road users. The accurate and reliable identification of traffic management objects is paramount for the development of autonomous driving systems, which rely heavily on sensor data and environmental understanding to navigate roads safely.

Traditionally, annotation of traffic management objects has been performed in two dimensions (2D). This process involves tagging images with labels that identify and categorize different traffic signs, signals, and other pertinent road markers. While 2D annotation has been instrumental in the early stages of autonomous driving technology, it presents significant limitations when applied to the increasingly complex, dynamic, and inherently 3D nature of real-world driving environments. 2D annotations cannot fully capture the depth, orientation, and spatial relationships of objects, which are critical for the accurate perception and decision-making processes for autonomous vehicles or in traffic management tasks. For instance, the distance and angle of a traffic sign relative to a vehicle, which are crucial for timely and appropriate responses, are not effectively conveyed through 2D annotations.

Moreover, manual annotation, whether in 2D or 3D, poses substantial challenges. It is a labor-intensive, time-consuming, and expensive process that requires significant human effort and expertise. Manual 3D annotation, in particular, is even more daunting due to the added complexity of accurately defining objects in three-dimensional space. This process is not only slow but also prone to inconsistencies and errors, which can compromise the reliability of the data used to train and validate autonomous driving systems.

US 2023/186499 A1 refers to automatic localization of static objects in an urban environment. Noisy image data are used to identify and determine positions of objects in large scale environments. Static objects are located by using a voting-based triangulation technique.

KR 2023104841 A refers to annotating objects in map data used to drive an autonomous vehicle. The approach is based on LiDAR data of the environment around the autonomous vehicle and used to register target objects to map data. Another approach relying on LiDAR and camera data is described in Wonho Song and Hyun Myung: "3D Traffic Sign Detection Using Camera-LiDAR Projection", Recent Trends in Mechatronics Towards Industry 4.0, Lecture Notes in Electrical Engineering, vol. 730, 2021, which uses deep learning 2D object detection followed by LiDAR-camera calibration data and outlier removal algorithm in order to collect 3D point cloud data of traffic signs.

EP 4 205 025 A1 discloses an approach for training a classifier to identify traffic signal states in images captured by a vehicle. The vehicle uses the identified states when making movement decisions in an environment.

Simone Mentasti et al.: "Traffic lights detection and tracking for HD map creation", Frontiers in Robotics and AI, 2023, discloses a pipeline for lights HD-map creation designed to provide georeferenced position and description of traffic lights seen by a camera mounted on a surveying vehicle.

Nathaniel Fairfield and Chris Urmson: "Traffic Light Mapping and Detection", IEEE International Conference on Robotics and Automation, 2011, discloses a method for automatically applying 3D positions of traffic lights and detecting traffic light state onboard cars with cameras.

### SUMMARY OF THE INVENTION

The limitations of 2D annotation and the impracticalities of existing 3D annotation underscore the need for an automated, reliable, and efficient method for 3D annotation of traffic management objects. In conclusion, there is a need for improved approaches to automatic 3D annotation of traffic management objects that overcome the drawbacks of the above-mentioned prior art approaches.

Thus, the objective of the present invention is to provide a method for automatically annotating traffic management objects in three-dimensional space and a method of generating a training dataset according to the independent claims. Moreover, corresponding (electronic) devices or apparatuses, machine-readable media, and (computer) systems are defined.

A first aspect of the invention provides a method for annotating, preferably automatically annotating, traffic management objects in three-dimensional space, comprising obtaining a plurality of image frames, at least some of the image frames including two-dimensional bounding boxes of traffic management objects, and each image frame associated with position and orientation data, localizing centers of 3D bounding boxes of traffic management objects using the plurality of image frames including the 2D bounding boxes, and the respective position and orientation data, for each localized center of a 3D bounding box of a traffic management object, calculating an extent and orientation of the 3D bounding box based on image frames including the 2D bounding box of the traffic management object, for each 3D bounding box of a traffic management object, projecting the 3D bounding box on image frames associated with the traffic management object, generating a plurality of 2D image cutouts of traffic management objects based on the projected 3D bounding boxes, and training at least one model to classify traffic management objects in the plurality of 2D image cutouts.

The method for automatic annotation of traffic management objects is a computer-implemented method. The method may be implemented in a computing device or on a system with one or more computing devices, including one or more processors or processing units (PUs) that may be coupled to each other or communicate with each other, and that may be configured to perform individual method steps. The one or more processors or PUs may implement hardware and/or software modules that execute the individual method steps.

The method of the first aspect operates on a plurality of image frames with 2D bounding boxes of traffic management objects. The image frames may come from a moving camera or multiple stationary cameras placed at different viewpoints in an environment. Each image frame is associated with position and orientation data of the image frame (in 3D space) in the environment. The 2D bounding boxes in the plurality of image frames and their position and orientation are used to determine centers of the traffic management objects in 3D space.

A 2D bounding box is a rectangular frame in the image frame that defines the location of an object within the image frame. The 2D bounding box is "2D" because it operates within the two-dimensional space of the image frame. The 2D bounding box may be specified by two points, such as the coordinates of the top-left corner and the bottom-right corner of the rectangle. Alternatively, it can also be defined by the coordinates of one corner (often the top-left), along with the width and height of the bounding box. The purpose of a 2D bounding box is to highlight or isolate an area within the image frame that includes the traffic management object. The coordinates of the 2D bounding box may be typically in pixels relative to the dimensions of the image frame, where the origin (0,0) is usually at the top-left corner of the image. The x-coordinate may increase to the right, and the y-coordinate may increase downwards. However, it is to be understood that other parameters for designating the rectangular area of the 2D bounding box may be used. Using a plurality of 2D bounding boxes in the plurality of respective image frames in combination with position and orientation data of the respective image frames, enables a localization of centers of the traffic management objects in 3D space, wherein each center may constitute a center of a respective 3D bounding box of the traffic management object. In addition, each center of a respective 3D bounding box of a traffic management object may be associated with a set of image frames including the 2D bounding boxes designating the traffic management object.

A 3D bounding box extends the concept of a 2D bounding box into 3D space. While a 2D bounding box is defined by a rectangle on a plane, encapsulating an extent of a traffic management object in an image frame in terms of width and height, a 3D bounding box encapsulates the extent of the traffic management object in width, height, and depth, effectively creating a volumetric boundary around the object. A 3D bounding box may be represented by a three-dimensional rectangular prism (or cuboid) and is typically defined by a center, an extent and orientation (rotation) with respect to the principal axes, typically X, Y, and Z. Additionally or as an alternative, the 3D bounding box may be defined by the coordinates of its eight corners or by one corner with the dimensions of width, height, and depth along the three principal axes.

In the method according to the first aspect, the (3D) centers may be considered as reference points for constructing the corresponding 3D bounding box around the traffic management object, providing a comprehensive representation of the location, size, and orientation of the traffic management object in the environment. As discussed previously, each localized 3D center may correspond to a corresponding set of image frames including 2D bounding boxes of the respective traffic management object. This set of image frames may be utilized to calculate an extent and orientation of the 3D bounding box in relation to the localized center.

The method further uses the specified 3D bounding boxes to generate a plurality of 2D image cutouts of the traffic management objects. The2D image cutouts are generated according to projected 3D bounding boxes of the respective traffic management object. In particular, each 3D bounding box of a traffic management object is projected on those image frames that are associated with the traffic management object, such as image frames which include the 2D bounding box of the traffic management object. Subsequently, at least one model is trained to classify traffic management objects in the plurality of 2D image cutouts.

The 2D image cutouts are cropped sections from larger image frames, created by selecting and extracting specific regions of interest based on the projected 3D bounding boxes. By focusing on the specific region that contains the traffic management object, these 2D image cutouts can provide cleaner, more focused data for training, allowing the models to learn relevant features without the distraction of background noise or irrelevant parts of the image.

Each 3D bounding box, which defines the spatial extent of a traffic management object in 3D space, is projected onto a 2D plane of the image frame. This projection translates the volumetric information of the 3D bounding box into a 2D perspective, preferably considering a camera's viewpoint, angle, and the spatial position of the traffic management object. The projection process results in a rectangular area (which may again be represented as a 2D bounding box) that outlines the region of the image frame where the traffic management object appears, considering its 3D position and size. The rectangular area is then cropped from the original image frame, resulting in the 2D image cutout. The 2D image cutout is essentially a smaller image that contains the traffic management object designated by the 3D bounding box, framed according to the rectangular area. Preferably, the 2D image cutouts can be created using image frames that are located within a pre-defined distance to the traffic management object in 3D space. Preferably, the 3D bounding box of a traffic management object can be projected on image frames at a distance of 200 meters from the traffic management objects or less.

The 2D image cutouts can reduce computational requirements by focusing on smaller image regions containing the traffic management objects rather than processing entire image frames. They further focus on the traffic management object, which can help the at least one model learn relevant features more effectively, thereby improving recognition accuracy. Furthermore, generating 2D image cutouts from various angles and distances, using the 3D bounding boxes, can introduce desirable variability into the training dataset, helping to create more robust models.

The method provides for a robust, fast, and efficient approach, which enables an automatic 3D annotation of traffic management objects, which is based on readily available 2D annotations. The resulting 3D annotations are used to generate a training dataset with increased variability to efficiently train at least one model with increased accuracy and robustness.

In a first implementation of the method according to the first aspect, the 2D bounding boxes are obtained using an image detector neural network, wherein the method further comprises detecting a confidence level of detected 2D bounding boxes and using image frames with 2D bounding boxes with a confidence level above a threshold to localize the centers of 3D bounding boxes of traffic management objects. Along with the 2D bounding boxes, the image detector neural network may provide a confidence level for each detection. This confidence level, often expressed as a percentage or a probability between 0 and 1, may indicate the network's certainty in its detection and classification of the traffic management object within the bounding box.

The (image detector) neural network may scan the image frame, looking for patterns, features, or characteristics that match those of traffic management objects it has been trained to recognize. This could include various traffic management objects depending on the neural network's training data. Once an object is detected, the neural network may determines its location within the image frame and draw a 2D bounding box around it. This 2D bounding box may outline the extent of the traffic management object as seen in the image frame. The confidence level may reflect how sure the neural network is that the bounding box contains a specific type of traffic management object. For example, a confidence level of 95% could indicate that there is a 95% probability that an object within the bounding box is correctly identified as a traffic management object according to the categories the model is trained on. The confidence level may be calculated based on the output of specific layers of the neural network, such as a softmax layer, which may be combined with the precision of the 2D bounding box or other relevant factors. For example, the confidence level may factor in a likelihood of the traffic management object's class and the accuracy of its spatial location and size.

The threshold may be set to filter out detections with low confidence levels. For instance, only detections with a confidence level above a certain threshold, such as 50%, 60%, 70%, 80% or 90%, or others, could be considered valid. It is to be understood that the threshold could be adjusted to improve robustness of the method. Using the threshold helps to reduce false positives, where the network might incorrectly identify irrelevant objects or noise as valid traffic management objects.

In a further implementation of the method according to the first aspect, said localizing centers of 3D bounding boxes of traffic management objects includes, for each image frame including a 2D bounding box of a traffic management object, casting a center line from a camera position related to the image frame to a center of the 2D bounding box in the image frame, to generate a plurality of center lines for the plurality of image frames. This 3D reconstruction and localization tasks may be solved based on the image frames that include sensor data taken from different angles or positions. Each 2D bounding box may be defined by its corner coordinates or by one corner and its dimensions (width and height). This can be used to calculate the center point of each 2D bounding box. This can be done by averaging the coordinates of the diagonally opposite corners or by adding half of the width and height to the coordinates of the top-left corner. From the camera's position related to each image frame, a line can be casted towards the center of the 2D bounding box. This line represents the projection of the traffic management object's center from the camera's perspective. The camera's position and orientation (extrinsic parameters) and its internal characteristics like focal length and lens distortion (intrinsic parameters) could be further taken into consideration to accurately cast the center lines in 3D space. The center lines can be used to determine the centers of the 3D bounding boxes of respective traffic management objects. By leveraging multiple viewpoints of the image frames and the geometry of projection, this method effectively bridges the gap between 2D image data and 3D spatial understanding, enabling a comprehensive spatial analysis and decision-making processes in automated systems and applications.

In a further implementation of the method according to the first aspect, said localizing centers of 3D bounding boxes of traffic management objects further includes identifying sets of center lines in the plurality of center lines, which approach each other closer than a pre-determined distance, generating a plurality of candidate points by iterating over each pair of center lines in each set to determine a candidate point closest to the respective pair of center lines, clustering the plurality of candidate points to form clusters, and calculating a center of a 3D bounding box of a traffic management object using the candidate points of each cluster.

To determine different traffic management objects, the center lines are analyzed to identify sets where the lines approach each other closer than a predetermined distance. This step is crucial as it helps in distinguishing different traffic management objects and filtering out lines that are less likely to intersect due to errors in detection or camera positioning. For each set of center lines identified as approaching each other close enough (according the predetermined distance), pairs of lines are established and, for each pair, a candidate point that lies closest to both lines is determined. This is typically achieved through a geometric method or algorithm that finds the shortest distance between two lines in 3D space and identifies the midpoint of that shortest segment as the candidate point. The resulting candidate points from all considered pairs of center lines are then subjected to a clustering algorithm. Clustering groups these points based on their proximity to each other. Various clustering algorithms can be used, such as K-means, DBSCAN, or hierarchical clustering. The choice of algorithm can depend on the expected distribution of points and the specific requirements of the task, such as the need to specify the number of clusters in advance. Within each cluster of candidate points, the central point of the cluster can be calculated. This can be done, for example, by computing the geometric median, the centroid, or another representative point based on the cluster's distribution.

Preferably, the center of a cluster is calculated using an average of the candidate points in the cluster. The central point of each cluster can be considered as the center of the 3D bounding box for a traffic management object corresponding to that cluster. Thus, each cluster may represents a different traffic management object.

In a further implementation of the method according to the first aspect, candidate points form a cluster if their number exceeds a first threshold and if their distance to each other is less than a second threshold. This groups together closely packed points and can help identifying points that are in low-density regions as outliers. Clustering is performed based on proximity of the candidate points to each other. The aim here is to group candidate points that are close together, as they likely represent the same physical traffic management object in space. To increase robustness of the approach clusters that are too small, i.e. clusters that include a number of center points below the second threshold are discarded as outliers.

In a further implementation of the method according to the first aspect, said calculating of an extent of the 3D bounding box of a traffic management object includes calculating a plurality of cross sections by, for each image frame including a 2D bounding box of the traffic management object, casting lines from a camera position related to the image frame towards corners of the 2D bounding box of the traffic management object, and calculating intersections of the lines with a plane at the center of the 3D bounding box, which is parallel to the vertical axis and perpendicular to a horizontal component of a line of sight vector, to calculate a cross section, and using the plurality of cross sections to estimate the extent of the 3D bounding box. The plane at the center of the 3D bounding box, which can also be referred to as a center plane, may serve as a reference for projecting the corners of the 2D bounding boxes (as seen in image frames) into 3D space to estimate the traffic management object's dimensions. The center plane can be placed in the center of the 3D bounding box of the traffic management object. The plane can be parallel to the vertical axis, which, in most contexts, is aligned with gravity, pointing upwards. This alignment ensures that measurements of the object can be made in a manner consistent with how objects are typically oriented and perceived in the real world. The line of sight vector may be a directional line from the camera's position to the center of the 3D bounding box of the traffic management object as it appears in the 2D image frame. This vector represents the direction in which the traffic management object is viewed from the camera position. The horizontal component of the line of sight vector may refer to the projection of the line of sight vector onto a horizontal plane, essentially removing any vertical elevation or declination from the camera to the traffic management object. This horizontal direction indicates the viewpoint direction at ground level. The center plane is perpendicular to the horizontal direction, which corresponds to the horizontal component of the line of sight vector. The center plane can be constructed to pass through the center of the 3D bounding box, aligned with the vertical axis (e.g., ensuring it's parallel to the direction of gravity) and standing perpendicular to the horizontal component of the line of sight vector. The intersections of the lines casted towards the corners of the 2D bounding box with the center plane define a cross section. The size of each cross section can be preferably defined by a width and height. Additionally or as an alternative, each section can be characterized by a position, such as a position relative to the center of the corresponding 3D bounding box; and an orientation, such as the orientation of the center plane.

In a further implementation of the method according to the first aspect, the method further includes using an average size or a maximum size of the plurality of cross sections to estimate the extent of the 3D bounding box. The size of each cross section can be defined by at least one of a width or height of the cross section. The extent of the 3D bounding box can be defined by at least one of a width, depth, or height of the 3D bounding box. Estimating the extent of a 3D bounding box for a traffic management object based on a number of calculated cross sections may involve analyzing the width and/or height of one or more of the cross sections to determine the overall dimensions of the corresponding 3D bounding box in 3D space. The average width and/or maximum width, for example, can be used to estimate one dimension of the 3D bounding box (e.g., the width), and/or the average height and/or maximum heigh can represent another dimension (e.g., the height) of the 3D bounding box. The depth of the bounding box could be estimated based on a spread or distribution of the size of the cross sections along a reference plane.

Using an average of the size of the cross sections provides a representation of a traffic management object's typical size as observed from multiple viewpoints. Using maximum values for width and/or height observed across all cross sections may ensure that the estimated 3D bounding box will encompass the entire traffic management object, regardless of a viewpoint. The choice between using average or maximum sizes may depend on uniformity of the annotated traffic management objects and accuracy requirements. For objects that maintain a consistent size from various angles, averages might provide a more accurate representation. For irregularly shaped objects or when ensuring complete coverage is critical, maximum sizes may be used. For example, if the annotated traffic management objects represent traffic lights, the width of the 3D bounding box may be set to the average width of the plurality of cross sections and the height of the 3D bounding box may be set to the average height of the plurality of cross sections. In yet another example, if the annotated traffic management objects represent traffic signs, the width of the 3D bounding box may be set to the maximum width of the plurality of cross sections and the height of the 3D bounding box may be set to the maximum height of the plurality of cross sections.

In a further implementation of the method according to the first aspect, the method further comprises setting a predefined value for a depth or the same value for width and depth of an extent of a 3D bounding box. The depth value may be set according to spatial characteristics of the annotated traffic management objects. For example, if the annotated traffic management objects are known to have a consistent depth across different instances, or when the precise depth is not critical for the annotation, a predetermined depth can be set for at least some of the 3D bounding boxes. This may apply, for example, to certain types of traffic signs or barriers having standardized dimensions. In these cases, a depth value can be chosen based on domain knowledge, regulatory standards, or empirical data about the traffic management objects of interest. The value can be implemented as a constant and applied uniformly across at least some or all 3D bounding boxes of traffic management objects. For example, the depth may be set to a value in the range of 5 cm to 25 cm, preferably to a range of 7 cm to 15 cm, and most preferably to a value including 10 cm, 11 cm, or 12 cm. it is to be understood that these values are preferred examples and other values can be chosen based on characteristics of the type of traffic management objects.

On the other hand, 3D bounding boxes for traffic management objects that are expected to be roughly symmetrical in the plane perpendicular to the observation direction could be defined such that the width equals the depth. This may be applied in contexts where traffic management objects of interest tend to have a uniform shape, such as traffic lights. Hence, after determining the width of the 3D bounding box, such as by using the maximum or average width derived from cross-sectional analysis the depth value of the extent of the 3D bounding box may be set to the same value. The choice of determining the depth may be guided by characteristics of the traffic management objects that are annotated and the requirements of the use case. For example, if precision in spatial representation is less critical than processing efficiency or if the traffic management objects are known to have standard dimensions, setting a predefined depth may be a practical approach. If the traffic management objects are more uniform in shape and size, using the same value for width and depth might offer a reasonable balance between simplicity and accuracy.

In a further implementation of the method according to the first aspect, said calculating an orientation of the 3D bounding box of a traffic management object includes identifying a reference frame in image frames including a 2D bounding box of the traffic management object, wherein the reference frame has a position at a predefined distance to the traffic management object, determining a moving direction at the position of the reference frame, and calculating the orientation of the 3D bounding box to be oriented opposite to the moving direction. Calculating the orientation of a 3D bounding box for a traffic management object involves using contextual cues from the environment, specifically the traffic management object's relationship to available image frames and particularly to the reference frame and a movement direction (of a vehicle) associated with the reference frame. The reference frame can be used to establish a base orientation within the image frames that contain the 2D bounding boxes of the traffic management object. Among the multiple image frames capturing the traffic management object, one that meets the criterion of being at a predefined distance from the object is identified and chosen as the reference frame. The distance can be determined using position and orientation data of the image frame, which can be derived, for example, from camera metadata, which can be, for example, compared with already established center of the corresponding 3D bounding box. Further parameters for determining a distance may include object size comparison across image frames, or depth sensors, ensuring the selected frame is appropriately distanced for accurate orientation analysis. The reference frame may either indicate a moving direction based on camera or vehicle metadata. If this information is not available, a corresponding image frame sequence including the reference frame can be analyzed to determine the moving direction. Additionally or as an alternative, environmental cues can be analized to determine the moving direction relative to the traffic management object. This could involve observing the flow of traffic, the orientation of lane markings, or the direction faced by pedestrians. Additionally or as an alternative, visual indicators within the reference frame, such as a direction of vehicles, arrows on the road, or the configuration of the surrounding infrastructure, can be used to estimate the moving direction at the reference frame's location or confirm an already determined moving direction. With the moving direction determined from the reference frame, the orientation of the 3D bounding box of the traffic management object can be set to be opposite to this direction. This alignment ensures that the front of the 3D bounding box faces against the direction of movement, mirroring how traffic management objects are typically positioned to face oncoming traffic. By considering the reference frame as one of the image frames at a specific distance to the traffic management object, this approach leverages direct observation and analysis of the traffic management object's environment to infer its correct orientation, enhancing the precision of the resulting 3D bounding boxes.

In a further implementation of the method according to the first aspect, said calculating an orientation of the 3D bounding box of a traffic management object includes identifying a reference frame with a 2D bounding box of the traffic management object with a maximum width, and setting the orientation to an opposite direction of a horizontal component of a line of sight vector of traffic management object according to the reference frame. As an alternative to choosing a reference frame at a particular distance, or additionally to improve or refine the determination of the reference frame, the width of the traffic management objects in each image frame including a corresponding 2D bounding box may be analyzed. Preferably, the reference frame is identified based on a maximum width of the depicted traffic management object (or the corresponding 2D bounding box) for traffic management objects that are generally flat and/or rectangular, making the image frame where the traffic management object appears widest likely the one where it faces the camera most directly. This image frame can be chosen as the reference frame because it likely captures the traffic management object in full view, providing an indication of its intended direction of visibility. For example, this applies to traffic signs and other types of traffic management objects having a flat side.

Among the collected image frames that include the traffic management object, the image frame where the 2D bounding box around the traffic management object has the maximum width may be selected as the reference frame. The reference frame is considered to best represent the traffic management object's orientation because the maximum width suggests that the traffic management object is viewed from a frontal perspective, providing an indication of its facing direction. For the traffic management object in the reference frame, the line of sight vector may be calculated. This vector may represent the direction from the camera's viewpoint to the (center of the) traffic management object. In practical terms, this can be seen as a straight line from the camera to the center of either the 2D bounding box in the selected reference frame or the center of the 3D bounding box of the traffic management object. Subsequently, a horizontal component of the vector can be extracted. The horizontal component is the projection of the line of sight vector onto a horizontal plane, essentially ignoring any vertical elevation or declination. The horizontal component may indicate the primary direction in which the camera is facing relative to the object. With the horizontal component of the line of sight vector determined, the orientation of the 3D bounding box may be set to be directly opposite to this component. Since the traffic management object is designed to face oncoming traffic or viewers, setting the orientation opposite to the line of sight vector ensures that the 3D bounding box accurately reflects the traffic management object's real-world orientation.

In a further implementation of the method according to the first aspect, said calculating an orientation of the 3D bounding box of a traffic management object includes using an image-based regression model to determine the orientation of the 3D bounding box. The image-based regression model may directly learn from the image frame data. The model may employ regression to predict continuous variables, such as orientation parameters or angles defining the orientation of the traffic management object in 3D space. A dataset of image frames featuring traffic management objects, along with their known orientations, may be initially compiled. The orientation can be represented in various formats, such as Euler angles (yaw, pitch, roll) or quaternions, and the like. The model may learn to identify features within the images that correlate with the object's orientation. This could involve the shape of the traffic management object, its appearance from different angles, contextual cues from the surrounding environment, and how these aspects change relative to the camera viewpoint. Once trained, the regression model can predict the orientation of traffic management objects in the image frames. Using an image-based regression model to calculate the orientation of 3D bounding boxes for traffic management objects offers a powerful, data-driven approach that leverages the capabilities of machine learning for accurate and efficient orientation estimation.

In a further implementation of the method according to the first aspect, the method further comprises training a first model to classify a state of traffic management objects in the plurality of 2D image cutouts. The training dataset for the first model may include any labeled dataset, such as any proprietary labeled dataset or publicly available labeled dataset, such as the OpenLane-V2 dataset. The training dataset may include images with labeled states for a variety of lighting conditions, angles, distances, and backgrounds. Diversity in the training dataset is crucial for training a robust model capable of performing well in real-world conditions.

The state may depend on the type of the traffic management object. The state may be a static or dynamic state. The state may include an occlusion level. This may be used for static traffic signs. The state may include a color and an occlusion level. This may be used, for example, for traffic lights or dynamic message signs. The color state may be classified into a plurality of categories, such as, one or more of red, green, red-yellow, yellow, and unknown, which may cover essential signals required for navigating intersections or controlling traffic, with "unknown" providing a fallback for ambiguous cases. Occlusions may be treated as a binary classification task. The first model may predict the probability of an image cutout not being a traffic management object, which corresponds to an occluded object. This may be used for identifying and disregarding obstructed views, ensuring the system relies on clear, visible signals.

In one example, the training dataset for training the classifier models, including the first model, may include a type of the traffic management object, such as a type of traffic signs, a color state, and a mask type of traffic lights. The training dataset can be a manually labelled dataset. The training dataset may include proprietary (in-house) data as well as publicly available data. Occlusion can be trained in a fully automated way by selecting the 2D bounding boxes identified by the image detector neural network with high confidence and labeling the respective image cutouts as not occluded in a training dataset. Subsequently, the 2D bounding boxes can be placed to random positions in the image frame and respective image cutouts can be labelled as occluded in the training dataset. This is based on the observation that the random positions will most likely not contain any traffic management object. The classifier models can be trained as an occlusion predicting network on these automatically labeled data in the training dataset.

In a further implementation of the method according to the first aspect, the first model is a convolutional neural network. Preferably, the first model may be a two-headed convolutional neural network. In this case, the neural network may perform two tasks at the same time, such as color state classification and occlusion estimation. The dual-task approach may allow for simultaneous processing, thereby optimizing the neural network's efficiency and effectiveness.

In a further implementation of the method according to the first aspect, the method further comprises using the first model to infer a state of a traffic management object based on one or more image frames associated with the traffic management object, including, for an image frame of the one or more image frames, conducting a majority vote on a state inferred for a number of preceding and succeeding image frames of the image frame to determine the state of the traffic management object. This combines model inference with temporal analysis to enhance accuracy and reliability. Leveraging majority voting across a sequence of image frames accounts for temporal consistency and minimizes the impact of potential misclassifications or transient occlusions. The first model, which has been trained to classify the state of traffic management objects, is applied to each image frame within a given sequence. This sequence includes the target frame for which the state is being determined, as well as a specified number of preceding and succeeding frames. For each frame, the model predicts the state of the traffic management object. Given that the model is designed to handle states of the traffic management object, each inference may provide an estimation of the traffic management object's current state, such as a color and/or visibility. A temporal window may be defined around the target frame, including a set number of frames before and after it. This window size may be chosen based on the expected duration of states, such as a traffic light cycle, or other relevant temporal factors, including expected occlusions. Within this window, the inferred states from each image frame may be aggregated, and the state that appears most frequently is selected as the final determination for the object's state at the time of the target frame. The majority vote may be further weighted by associating the inferred state for the target frame with a larger weighting factor and the remaining states in the window with lower factors, and the like. If occlusion detection is part of the first model's output, frames where the object is determined to be occluded can either be excluded from the voting process or handled accordingly to ensure they don't erroneously influence the final state determination.

In a further implementation of the method according to the first aspect, the method further comprising, obtaining a number of 2D image cutouts for each traffic management object and training a second model to classify a mask type of traffic management objects using the number of 2D image cutouts. The second model can be targeted to nuanced variations in the appearance of traffic management objects, which can be represented by respective mask types. The classification of mask type essentially refers to identifying specific functional symbols or designs displayed by the traffic management object, such as a direction indicated by an arrow on a dynamic message sign or a traffic light, or the presence of pedestrian crossing symbols or construction site symbols. Each image cutout can be annotated with a specific mask type it represents. This could include various symbols on traffic lights, dynamic message signs or traffic signs, such as arrows indicating direction, pedestrian symbols, construction site symbols, and the like, or specific shapes or designs on traffic signs, and more. The second model may be a neural network architecture that is suitable for image classification tasks. Training the second model on the annotated dataset of 2D image cutouts may involve feeding the image cutouts into the model, allowing it to learn the visual features associated with each mask type through the process of optimization, usually employing a loss function that measures the difference between the predicted and actual labels. Subsequently, separate subsets of the data (not seen by the second model during training) can be used for validation and testing. The second model can be evaluated using performance metrics, such as accuracy, precision, recall, and F 1 score. The training dataset for the second model may include a labeled dataset with the obtained 2D image cutouts, which can be manually labeled to train the classifier models, including the second model. However, it is to be used that the training dataset for the second model may also include any proprietary labeled dataset or publicly available labeled dataset.

In a further implementation of the method according to the first aspect, the traffic management object is a dynamic or static traffic management object. Preferably, the traffic management object may be one or more of a traffic sign, a traffic light, and a dynamic message sign. Each type of traffic management objects may serve distinct purposes and presents unique challenges for detection, classification, and interpretation in automated systems, such as those used in autonomous driving. Static traffic management objects may be are permanent or semipermanent fixtures in the traffic environment. They maintain a constant position and function and do not change state dynamically. Examples include traffic signs or barriers and bollards. Detection and classification must accurately recognize the traffic management object despite variations in lighting, weather conditions, and occlusions. Interpretation requires understanding the specific regulations or guidance each object conveys (e.g., speed limits, directional information, and the like). Dynamic traffic management objects may be those that can change state or position, providing real-time information or control based on current traffic conditions. Examples include dynamic message signs, also known as variable message signs (VMS), traffic lights, automated barriers or gates, and the like. State detection for dynamic traffic management objects requires not only recognizing the traffic management object but also accurately determining its current state or message. Temporal analysis may be necessary to predict changes or understand patterns in the traffic management object's state. Thus, training data must encompass a wide range of appearances for each object type, considering environmental variations. The focus may be on recognizing the object and understanding its fixed meaning. For dynamic traffic management objects, the model should be preferably trained on data that captures the different states or positions the traffic management object can exhibit.

Training of the first model and/or the second model may enhance the accuracy and utility of detection and classification of traffic management objects through a series of machine learning models and filtering techniques. High-precision 3D bounding boxes of traffic management objects are generated. The triangulation and computer vision approach leads to accuracy within 0.2 to 0.3 meters of the ground truth. From the 3D bounding boxes, 2D image cutouts of traffic management objects are produced by projecting the 3D bounding boxes onto the camera image plane (image frames) from distances, preferably starting at 200 meters. This distance can be adjusted according to parameters and conditions. The approach captures traffic management objects as they would appear in camera feeds.

A specialized model, preferably a CNN, is developed to handle one or two tasks, depending on the type of the traffic management object. This may include color state classification of dynamic traffic management objects into a plurality of classes, such as for traffic lights into five classes, including red, green, red-yellow, yellow, and unknown, and/or occlusion estimation as a binary classification, including visible or occluded. The model may use a combination of proprietary annotations and data from publicly available datasets, such as the OpenLane-V2 dataset.

A reasonable amount of image cutouts, such as at least approx. 100,000; 150,000; 180,000; or 190,000 image cutouts, including automatically generated occluded versions, can be used for training and evaluating the model, achieving high accuracy in color state classification and/or occlusion detection. To ensure consistent state predictions over time and mitigate misclassifications, a smoothing technique that considers frames before and after the current frame may be applied. Majority voting may determine a final color state, accounting for temporal variations in light states in dynamic traffic management objects.

For individual traffic management objects depicting symbols or having varying designs, the accurate detection and classification of traffic management objects can be used as a bases to further classify a specific mask type of each traffic management object. Mask types may represent the various symbols or indications a traffic management object can display, such as directional arrows, pedestrian symbols, or construction site symbols. For example, a further model can be trained on proprietary data or publicly available data to identify the mask type of each traffic management object from corresponding image cutouts, covering a comprehensive range of possible traffic indications. Preferably, the model could achieve at least a 99% accuracy on validation datasets.

Preferably, to reduce false positives in traffic management object detection, the mean Intersection Over Union (IOU) between the 2D projections of 3D bounding boxes and the initial 2D detections (based on initial 2D bounding boxes) may be calculated. This may help identify and retain only most accurate detections based on spatial overlap. Detections may be further refined by grouping candidates that fall along the same line of sight and selecting the candidate with the highest IOU. Predictions with an average occlusion rate above, for example, 85%, especially for observers closer than 20 meters, can be removed to ensure the visibility and relevance of the detected traffic management objects.

The described multi-stage process according to embodiments of the first aspect, from high-precision 3D mapping and 2D image cutout generation to sophisticated machine learning models for state, occlusion, and/or mask type classification, leads to a robust system capable of accurately detecting and classifying traffic management objects. Preferably, an incorporation of temporal smoothing and false-positive reduction techniques further enhances the system's reliability and applicability in real-world scenarios.

Preferably, the method further comprises providing the 3D bounding boxes in a map. The 3D bounding boxes provide a volumetric spatial representation of traffic management objects, detailing their position, orientation, and size within 3D space. The generated 3D bounding boxes can be provided in an HD map and used with any dataset including image data with position/orientation information, to generate 2D cutouts of the respective traffic management objects. This can be used for classification or for training purposes.

In a further implementation of the method according to the first aspect, the method further comprises generating a training dataset including the 3D bounding boxes of the traffic management objects. Preferably, the training dataset may include one or more of a state, an occlusion and a mask type of each traffic management object. Generating a training dataset that includes 3D bounding boxes of traffic management objects, along with comprehensive details such as state, occlusion, and mask type for each object, forms a solid foundation for training sophisticated machine learning models. These models can then be used for various applications, including autonomous driving, traffic management systems, and urban planning. The dataset can be used to train or validate machine learning models, particularly deep learning models like Convolutional Neural Networks (CNNs), to recognize, classify, and understand the characteristics and statuses of traffic management objects from various sensor inputs.

According to a second aspect, a method of generating a training dataset is defined, wherein the training dataset is generated based on 3D bounding boxes of traffic management objects, wherein the training dataset is obtained by performing a method according to any implementation of the first aspect. In particular, the training dataset may be obtained by automatically annotating traffic management objects in three-dimensional space, comprising obtaining a plurality of image frames, at least some of the image frames including two-dimensional bounding boxes of traffic management objects, and each image frame associated with position and orientation data, localizing centers of 3D bounding boxes of traffic management objects using the plurality of image frames including the 2D bounding boxes, and the respective position and orientation data, for each localized center of a 3D bounding box of a traffic management object, calculating an extent and orientation of the 3D bounding box based on image frames including the 2D bounding box of the traffic management object, for each 3D bounding box of a traffic management object, projecting the 3D bounding box on image frames associated with the traffic management object, generating a plurality of 2D image cutouts of traffic management objects based on the projected 3D bounding boxes, and training at least one model to classify traffic management objects in the plurality of 2D image cutouts. It is to be understood that preferred embodiments of the second aspect may contain features of embodiments or implementations of the first aspect in any combination.

A third aspect of the invention refers to a computer-readable storage medium storing instructions thereon that, when executed by a computing device, configure the computing device to perform a method according to the first aspect or the second aspect or one of the implementations of the first aspect or the second aspect. In particular, the computing device can be configured to automatically annotate traffic management objects in three-dimensional space, comprising obtaining a plurality of image frames, at least some of the image frames including two-dimensional bounding boxes of traffic management objects, and each image frame associated with position and orientation data, localizing centers of 3D bounding boxes of traffic management objects using the plurality of image frames including the 2D bounding boxes, and the respective position and orientation data, for each localized center of a 3D bounding box of a traffic management object, calculating an extent and orientation of the 3D bounding box based on image frames including the 2D bounding box of the traffic management object, for each 3D bounding box of a traffic management object, projecting the 3D bounding box on image frames associated with the traffic management object, generating a plurality of 2D image cutouts of traffic management objects based on the projected 3D bounding boxes, and training at least one model to classify traffic management objects in the plurality of 2D image cutouts. It is to be understood that preferred embodiments of the third aspect may contain features of embodiments or implementations of the first aspect or the second aspect in any combination.

A fourth aspect of the invention defines a device, comprising storage configured to store image data; and a processor, configured to access the storage and perform a method according to the first aspect or the second aspect or one of the implementations of the first aspect or the second aspect. In particular, the device, which can be preferably a computing device, can be configured to automatically annotate traffic management objects in three-dimensional space, comprising obtaining a plurality of image frames, at least some of the image frames including two-dimensional bounding boxes of traffic management objects, and each image frame associated with position and orientation data, localizing centers of 3D bounding boxes of traffic management objects using the plurality of image frames including the 2D bounding boxes, and the respective position and orientation data, for each localized center of a 3D bounding box of a traffic management object, calculating an extent and orientation of the 3D bounding box based on image frames including the 2D bounding box of the traffic management object, for each 3D bounding box of a traffic management object, projecting the 3D bounding box on image frames associated with the traffic management object, generating a plurality of 2D image cutouts of traffic management objects based on the projected 3D bounding boxes, and training at least one model to classify traffic management objects in the plurality of 2D image cutouts.

In a preferred implementation of the device according to the fourth aspect, the storage may be configured to store one or more of the image frames, the 2D bounding boxes, the determined 3D bounding boxes and the 2D image cutouts, in any combination.

It is to be understood that further implementations of the fourth aspect may contain features of embodiments or implementations of the first aspect or the second aspect in any combination.

According to yet another aspect of the present invention, at least one computer-readable medium may store a training dataset including 3D bounding boxes of traffic management objects. Preferably, the training dataset may include one or more of a state, an occlusion and a mask type of each traffic management object. Preferably, the training dataset may be obtained by performing a method according to any implementation of the first aspect or the second aspect.

It is to be understood that embodiments related to a computing device or a system may include logic, processor(s), or functional device(s), which may be configured according to features of an embodiment or implementation of the first aspect or the second aspect of the disclosure or any implementations of the first or second aspect, in any combination. Preferably, the computing device and the system may be configured according to embodiments of the method of the first or second aspect, in any combination. Likewise, the method according to embodiments of the first or second aspect may include processing steps reflecting functionality of structural features or components of embodiments of the computing device or the system of the fourth aspect, in any combination.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- Figure 1: is a flow chart of a method in accordance with an embodiment of the present invention,
- Figure 2: is a flow chart of a method in accordance with a further embodiment of the present invention,
- Figure 3: is a schematic illustration of a method step directed at localizing centers of 3D bounding boxes in accordance with an embodiment of the present invention,
- Figure 4: is a schematic illustration of a method step directed at calculation of an extent of a 3D bounding box in accordance with an embodiment of the present invention,
- Figure 5: is a schematic illustration of a method step directed at calculation of an orientation of a 3D bounding box in accordance with an embodiment of the present invention, and
- Figure 6: is a schematic illustration of a classification process in accordance with an embodiment of the present invention.

### DETAILED DESCRIPTION OF EMBODIMENTS

In the following description, reference is made to drawings which show by way of illustration various embodiments. Also, various embodiments will be described below by referring to several examples. It is to be understood that the embodiments may include changes in design and structure without departing from the scope of the claimed subject matter.

The techniques described herein may be implemented in various computing systems, examples of which are described in greater detail below. Such systems generally involve the use of suitably-configured computing devices implementing a number of modules, each providing one or more operations needed to complete execution of such techniques. Each module may be implemented in its own way; all need not be implemented the same way. As used herein, a module may be a structural component of a system which performs an operational role, which may be a portion of or an entire software element (e.g., a function of a process, a discrete process, or any other suitable embodiment). A module may comprise computer-executable instructions and may be encoded on a computer storage medium. Modules may be executed in parallel or serially, as appropriate, and may pass information between one another using a shared memory on the computer on which they are executing, using a message passing protocolor in any other suitable way. Exemplary modules are described below carrying out one or more tasks, though it should be appreciated that the modules and division of tasks described may be merely illustrative of the type of modules that may implement the exemplary techniques described herein, and that the invention is not limited to being implemented in any specific number, division, or type of modules. In some implementations, all functionalities may be implemented in a single module. Further, the modules are discussed below as all executing on a single computing device for clarity, though it should be appreciated that, in some implementations, the modules may be implemented on separate computing devices adapted to communicate with one another.

The present disclosure may use various abbreviations. For example, CNN may be used to refer to a convolutional neural network. LiDAR may be used to refer to Light Detection And Ranging. HD may be used to refer to High Definition, which may be used in conjunction with maps, for example. Other abbreviations readily known to the skilled person can be used throughout the disclosure.

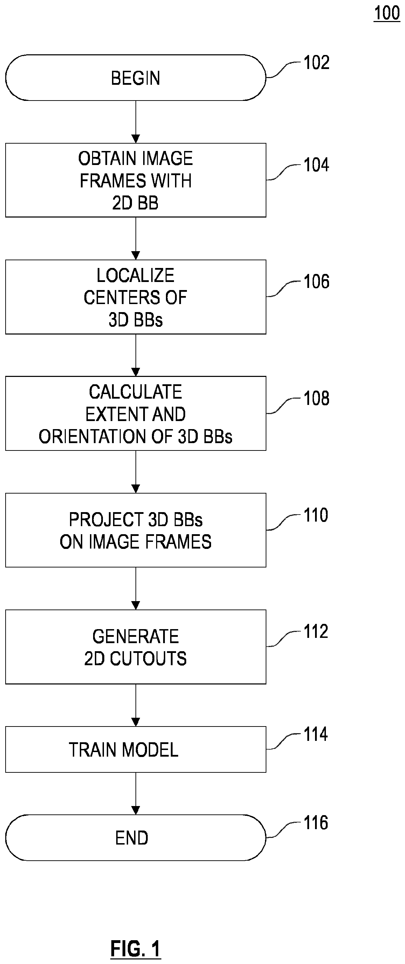

Figure 1 is a flow chart of a method in accordance with an embodiment of the present invention.

The method 100 may be a computer-implemented method for annotating traffic management objects in three-dimensional (3D) space.

The method 100 may start in item 102 and proceed to item 104, wherein a plurality of image frames may be obtained. At least some of the image frames may include two-dimensional (2D) bounding boxes of traffic management objects. Each image frame may be associated with position and orientation data. The image frames may be obtained by reading image data from a storage. However, the image frames may also be obtained by receiving a data stream, which may be provided by, for example, image sensors. The 2D bounding boxes may be obtained using an image detector neural network. A confidence level of detected 2D bounding boxes may be established.

The method 100 may continue with item 106 by localizing centers of 3D bounding boxes of traffic management objects using the plurality of image frames including the 2D bounding boxes, and the respective position and orientation data. For example, only image frames containing 2D bounding boxes with a confidence level above a threshold can be used to localize the centers of 3D bounding boxes of traffic management objects in item 106. The center lines can be generated by casting, for each image frame including a respective 2D bounding box, a line from a camera position related to the image frame can to a center of the 2D bounding box in the image frame. Subsequently, sets of center lines that approach each other closer than a pre-determined distance can be identified. The sets of center lines can be used to generate a plurality of candidate points. A candidate point may be a point closest to the respective pair of center lines. The plurality of candidate points can be clustered. The clusters and respective candidate points can be used to calculate centers of the 3D bounding boxes of the traffic management objects. Preferably, candidate points form a cluster if their number exceeds a first threshold and if their distance to each other is less than a second threshold. Other suitable clustering techniques can be used.

In item 108, the method 100 may calculating an extent and orientation of the 3D bounding boxes based on sets of the image frames that include the 2D bounding boxes of a respective traffic management object. This can be done for each localized center of a 3D bounding box. The extent of a 3D bounding box may be calculated using a plurality of cross sections. The cross sections are established by casting lines from a camera position related to an image frame towards corners of the 2D bounding box of the traffic management object in the image frame, and calculating intersections of the lines with a plane at the center of the 3D bounding box. This is done for each image frame including a 2D bounding box of the traffic management object. The plane at the center of the 3d bounding box may be parallel to the vertical axis and perpendicular to a horizontal component of a line of sight vector in the image frame. Subsequently, the cross sections are used to estimate the extent of the respective 3D bounding box.

For each 3D bounding box of a traffic management object, the 3D bounding box can be projected on image frames associated with the traffic management object in item 110. The projected 3D bounding boxes are used to generate a plurality of 2D image cutouts of traffic management objects in item 112.

The method 100 further includes training at least one model to classify traffic management objects in the plurality of 2D image cutouts in item 114.

The method 100 for annotating traffic management objects in 3D space provides several technical advantages for enhancing accuracy, efficiency, and scalability in traffic management and autonomous driving systems. The method's use of 3D bounding boxes, derived from 2D detections and associated position and orientation data, offers a more accurate representation of objects in space, crucial for precise navigation and interaction in autonomous driving. Utilizing image detector neural networks for identifying 2D bounding boxes and establishing confidence levels streamlines the detection process, reduces manual annotation efforts, and improves scalability. Focusing on data with high-confidence detections prioritizes computational resources on the most reliable information, improving the overall efficiency and accuracy of the annotation process. The advanced techniques for localizing 3D bounding boxes, including center line generation and clustering of candidate points, calculating the extent and orientation of 3D bounding boxes through cross-sectional analysis provides an in-depth understanding of object dimensions, positioning, and spatial orientation within the 3D environment. Generating 2D image cutouts from projected 3D bounding boxes focuses the analysis on relevant image sections, enhancing the effectiveness of subsequent machine learning model training. The structured process results in a rich dataset that facilitates efficient training of machine learning models for accurate classification of traffic management objects under various conditions.

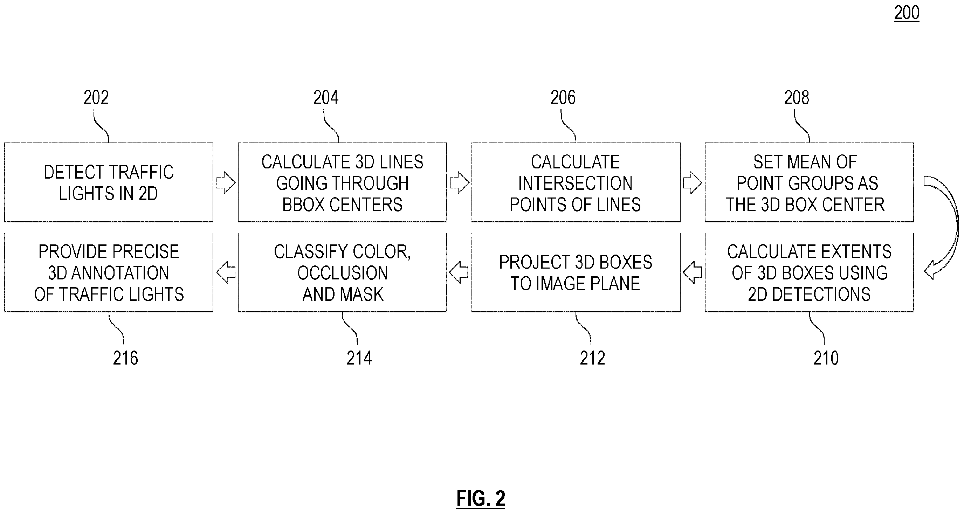

Figure 2 is a flow chart of a method in accordance with a further embodiment of the present invention. The method 200 may include processing steps of method 100 of Figure 1.

The method 200 can be applied to traffic lights. Traffic lights represent a dynamic type of traffic management objects with different states. However, it is to be understood that method 200 can be applied to any other kind of traffic management objects.

3D bounding boxes of traffic lights and their centers can be localized in Earth-centered, Earth-fixed coordinate system (ECEF) resulting in a 3D map of traffic lights. The method 200 may start with detecting traffic lights in 2D image frames, in item 202. 3D lines going through centers of 2D bounding boxes of the traffic lights in the 2D image frames can be calculated in item 204. To estimate position, extent, and orientation of corresponding 3D bounding boxes, candidate points for centers may be calculated based on the 3D lines and intersections in item 206. In particular, candidate points defined by narrow or intersecting 3D lines can be established and clustered. A mean of the candidate points in the clusters can be set as a center of a corresponding 3D bounding box, in item 208. Furthermore, the extent and orientation of the 3D bounding box can be estimated using cross section defined by the 3D lines and further line projections and intersections based on the 2D bounding box, in item 210.

The 3D bounding boxes of the traffic lights can be transformed into an instantaneous coordinate systems (body coordinate system) of each image frame in item 212 by projecting the 3D bounding boxes to the image plane. Image cutouts generated by the projection in item 212 can be classified with regard to a color state and occlusion, in item 214. The product of item 216 may be a dataset of 3D annotation of traffic lights for each image frame with color state, mask and occlusion information.

By localizing traffic lights in the Earth-centered, Earth-fixed (ECEF) coordinate system and estimating 3D bounding boxes, the method 200 offers high precision in spatial positioning, crucial for applications requiring accurate real-world mapping. Tailored to address dynamic traffic management objects like traffic lights, the method 200 adeptly handles traffic management objects with variable states, offering a robust solution for analyzing objects that change over time. Beyond mere detection, the method 200 provides a full spectrum of the detected traffic management objects and their attributes, including position, extent, orientation, color state, and occlusion status, enabling detailed analysis and application in various domains. The resultant dataset, encompassing 3D annotations with extensive attribute information for each traffic management object, is a valuable resource for training machine learning models, facilitating traffic studies, and enhancing autonomous navigation systems. Overall, method 200 introduces a sophisticated approach to 3D annotation of traffic management objects, combining 3D spatial analysis with detailed attribute classification to generate a richly annotated dataset, instrumental for advanced traffic management and autonomous driving technologies.

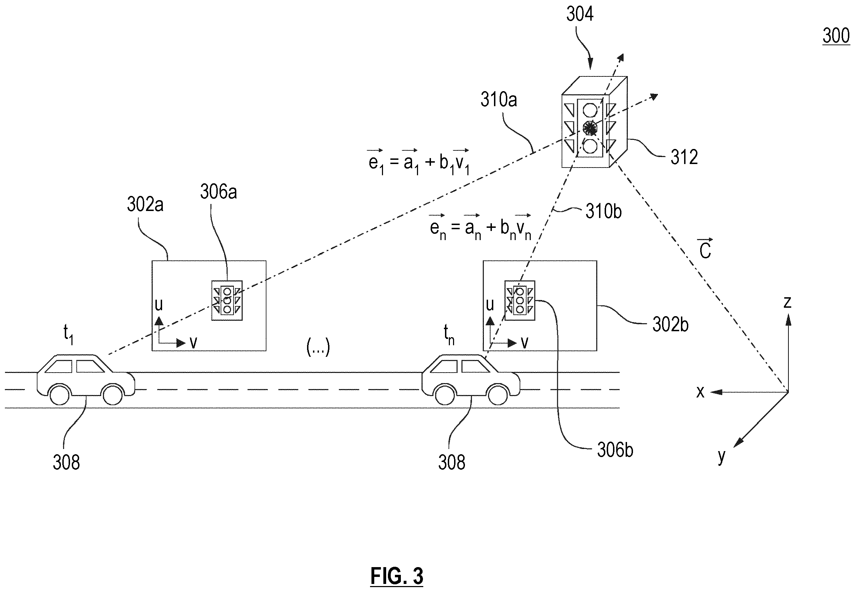

Figure 3 is a schematic illustration of a method directed at localizing centers of 3D bounding boxes in accordance with an embodiment of the present invention. The method 300 can be applied in item 106 of method 100 of Figure 1 or item 208 of method 200 of Figure 2.

Based on a plurality of image frames 302a, 302b that may include images of traffic management objects 304, such as traffic light. The traffic management objects 304 can be detected in the image frames 302 as a 2D bounding box 306a, 306b of the traffic management object 304. This may be done, for example, by using a precise image detector neural network, such as DINO (https://github.com/IDEA-Research/DINO). Only those predicted 2D bounding boxes can be used that have high confidence hence excluding false positive 2D detections. In the context of method 100 or method 200, this step does not cause a decrease in recall of 3D detection, because most of the image frames 302 will include traffic management objects 304 that are close and large enough to cause a highly confident 2D prediction.

Using position and orientation data, such as GPS data, of an observer 308 along a trajectory and using lines 310a, 310b pointing towards the 2D bounding box centers in respective image frames 302a and 302b, respectively, a center of a 3D bounding box 312 in a global coordinate system can be determined using triangulation technique.

Preferably, for all lines 310, those lines that approach each other closer than a predetermined threshold, such as 5 cm, can be considered. Other thresholds could be used, such as less than 15 cm, less than 10 cm, preferably 9 cm, 8 cm, 7 cm, 6 cm, or 5 cm. Other thresholds can be used. For each line pair, coordinates of a candidate point that is closest to the lines of the line pair can be calculated. The plurality of candidates points can be clustered, for example, using the DBSCAN clustering method. The 3D points can form a cluster if they are more than a predefined number, such as 5, and closer to each other than another threshold, such as 10 cm. Other numbers could be used, such as at least 5, at least 10, at least 15, preferably 5, 6, 7, 8, 9 or 10. Other numbers of points can be used. Furthermore, other thresholds could be used, such as closer than 5 cm, closer than 10 cm, closer than 20 cm, or closer than 25 cm. Other thresholds can be used. After identifying the clusters, an average of the cluster can be used as a final prediction of a center c of the traffic management object 312. The center c can be represented in ECEF coordinates.

The distance filtering and clustering steps provide robustness for the method 300 against different random errors related to GPS position, orientation, or camera calibration.

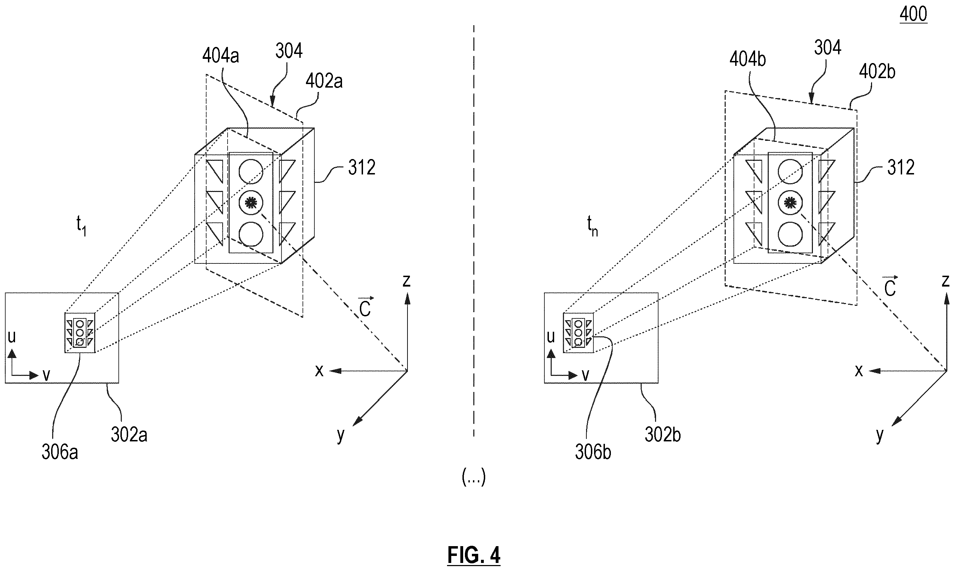

Figure 4 is a schematic illustration of a method step directed at calculation of an extent of a 3D bounding box in accordance with an embodiment of the present invention. The method 400 can be applied in item 108 of method 100 of Figure 1 or item 210 of method 200 of Figure 2. Method 400 can be executed based on results of method 300 of Figure 3. Therefore, the same reference signs as used in Figure 3 are also used in Figure 4.

Method 400 may use a map of traffic light box centers, such as the centers generated using method 300 of Figure 3. To determine the extent of the corresponding 3D bounding boxes 312, intersections of the lines pointing towards corners of the 2D bounding box 306 in each frame 302 and a plane 402a, 402b that is vertically aligned, contains the center of the 3D bounding box 312, and is perpendicular to the line of sight in the x-y plane is determined.

Using several image frames, a plurality of cross sections 404a, 404b of each 3D bounding box from several viewing angles can be estimated. In one example, applicable, for example, to traffic lights, an average of the widths and heights of the cross sections 404 can be used to estimate the width, depth, and height of the 3D bounding boxes 312. Setting the same value for width and depth may be a good estimate for the more frequently occurring vertically aligned traffic lights. For other types of traffic management objects, other heuristics can be used. For example, for traffic signs, a predetermined depth can be set.

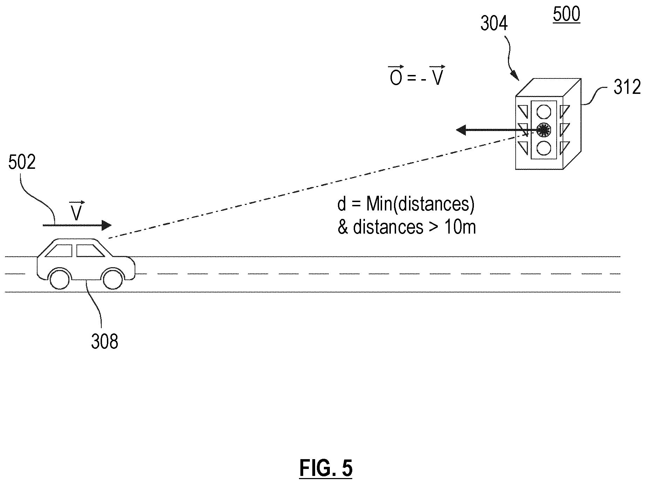

Figure 5 is a schematic illustration of a method step directed at calculation of an orientation of a 3D bounding box in accordance with an embodiment of the present invention. The method 500 can be applied in item 108 of method 100 of Figure 1 or item 210 of method 200 of Figure 2. Method 500 can be executed based on results of method 400 of Figure 4. Therefore, the same reference signs as used in Figures 3 and 4 are used in Figure 5.

Method 400 of Figure 4 may result in a plurality of 3D bounding boxes with centers and extents. Various approaches can be taken to determine an orientation of the 3D bounding box 312. This can depend on the type of the traffic management object 304.

A preferred heuristic approach for determining the orientation of the traffic management object 304 represented by the 3D bounding box 312 may consider an image frame which is just in front of the traffic management object, such as at a distance of 10 meters, and assume that the 3D bounding box is oriented opposite to a moving direction 502. Other distances could be used, such as 5 m, 10 m, 20 m, 30 m, 40 m, or 50 m. Other distances can be used. This heuristic may give an appropriate orientations for a plurality of traffic management objects, but its prediction can be wrong for traffic management objects located at specific positions, such as cross traffic related traffic lights.

Further approaches (not shown) may include the use of an image-based regression model for orientation prediction. Furthermore, orientation prediction can be based on a type of the traffic management object. For example, the orientation may be set opposite to a viewing direction of an image frame having the maximum width for traffic signs.

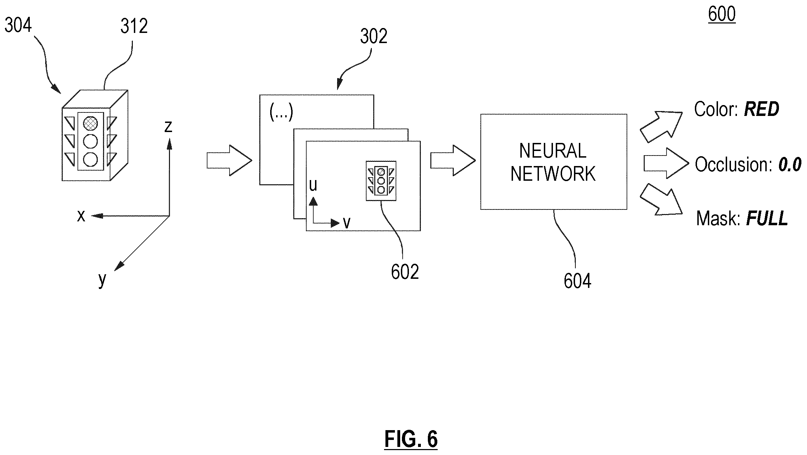

Figure 6 is a schematic illustration of a classification process in accordance with an embodiment of the present invention. The classification process 600 can be used in method 100 of Figure 1 or method 200 of Figure 2. The process 600 can be executed based on results of method 500 of Figure 5. Therefore, the same reference signs as used in Figures 3, 4, and 5 are used in Figure 6.

Process 600 can operate on an HD map of 3D bounding boxes 312 of traffic management objects 304 with high accuracy, preferably within 0.2-0.3 meters from the ground truth. The HD map can be used in other operational design domains (such as rain, night, snow, etc.).

From this HD map, 2D image cutouts 602 of traffic management objects are generated by projecting the 3D bounding boxes 312 to the camera image plane of corresponding image frames 302, preferably starting with image frames 302 from 200 meters distance to the location of the traffic management object 304. It is to be understood that other distances could be used, such as less than 100 m, less than 300 m, preferably 150 m, 200 m, or 250 m. Other distances can be used.

For classification of a state of the traffic management object 304, such as color state classification or occlusion estimation of traffic management objects, a neural network 604, such as a two-headed convolutional neural network can be used. The neural network 604 can be trained on a combined dataset of proprietary annotations as well as publicly available data, such as the OpenLane-V2 dataset (https://github.com/OpenDriveLab/OpenLane-V2/tree/master/data), where the color can be classified into five classes: red, green, red-yellow, yellow, and unknown.

Occlusion calculation can be treated as a binary classification task, where the output of the neural network 604 can be the 1 - probability of the image cutout to be a traffic management obj ect.

Occluded image cutouts can be automatically generated by moving coordinates of image cutouts in the combined dataset to a random place in the original image frames. These image cutouts could then be tagged as occluded and unknown color state. In one example, the neural network 604 was trained and evaluated on ~188,000 image cutouts where half of them were occluded. The model performance on the unseen test set was 97% and 96% related to the color state and occlusion, respectively.

To provide stable and temporally consistent state predictions during inference, an additional smoothing can be applied where a number of image frames 302 before and after a current image frame can be considered. The color state for the image frame can be set based on majority voting. In this way, the past and future may be considered to avoid temporal inconsistencies occurring in the prediction of states of traffic management objects due to neural network misclassification.

Results of process 600 could be used to obtain traffic management objects in 3D together with their state, including color and occlusion for every timestamp or image frame. For particular types of traffic management objects that may depict individual signs or designs in a dynamic manner, such as for traffic lights, using this information, image cutouts of the traffic management objects can be collected where a mask type can be classified as well. For each traffic management object a number of image cutouts, such as around 10, 15 or 20, may be transferred to an additional classifier network that may provide the mask type of the traffic management object.

For traffic lights, possible mask types may include one or more of the following: forward arrow, left/right arrow, forward left/forward right arrow, slight left/slight right arrow, slight lefthard left/slight right-hard right arrow, left-right arrow, forward left right arrow, u-turn, pedestrian, hand, full, bus, tram lights, and unknown.

Such an additional network can be trained on proprietary data and achieve 99% accuracy on an unseen validation dataset.

Despite applying several filtering methods as mentioned above with regard to Figures 1 o 6, false-positive detections of traffic management objects can still be present. This can be further avoided by determining a mean IOU between the 2D projections of the 3D bounding boxes 312 and the initial 2D bounding boxes 306, then finding groups where the candidates fall on the same line of sight and keeping that candidates that have a maximum IOU in each group. Furthermore, those predictions whose average occlusion was above 85% can be removed considering a distance from the observer less than 20 meters.

Embodiments of the present disclosure do not require point cloud data for 3D localization. Rather, embodiments of the present disclosure rely on 2D image detections and position information. Embodiments of the present disclosure have several advantages. The approach is faster than point cloud-based methods. The approach does not suffer from calibration error related to LiDAR data. And the approach can detect such traffic management objects where the LiDAR would not detect any reflection (traffic lights are located typically higher than the LiDAR sensing region).

In a preferred embodiment, the disclosure may encompass one or more processing devices with a plurality of means that may be configured to perform functionality of embodiments of the present invention. In particular, at least one device may be configured for annotating, preferably automatically annotating, traffic management objects in three-dimensional space, and may comprise means for obtaining a plurality of image frames, at least some of the image frames including two-dimensional bounding boxes of traffic management objects, and each image frame associated with position and orientation data, localizing centers of 3D bounding boxes of traffic management objects using the plurality of image frames including the 2D bounding boxes, and the respective position and orientation data, for each localized center of a 3D bounding box of a traffic management object, calculating an extent and orientation of the 3D bounding box based on image frames including the 2D bounding box of the traffic management object, for each 3D bounding box of a traffic management object, projecting the 3D bounding box on image frames associated with the traffic management object, generating a plurality of 2D image cutouts of traffic management objects based on the projected 3D bounding boxes, and training at least one model to classify traffic management objects in the plurality of 2D image cutouts.

Preferred embodiments of the one or more processing devices may include further means for implementing details of aspects, implementations thereof, and further embodiments as disclosed with regard to Fig. 1 to 6 and corresponding description, in any combination.

It is to be understood that the implementational details as provided in Fig. 1 to 6 represent preferred examples. Other implementations using different components, modules, blocks, units, circuitry, connections, and links can be used, and the present disclosure is not restricted by a particular implementation in silicon.

While some embodiments have been described in detail, it is to be understood that aspects of the disclosure can take many forms. In particular, the claimed subject matter may be practiced or implemented differently from the examples described, and the described features and characteristics may be practiced or implemented in any combination. The embodiments shown herein are intended to illustrate rather than to limit the invention as defined by the claims.

## Claims

1. A computer-implemented method for annotating traffic management objects in three-dimensional (3D) space, comprising:
obtaining a plurality of image frames, at least some of the image frames including two-dimensional (2D) bounding boxes of traffic management objects, and each image frame associated with position and orientation data;
localizing centers of 3D bounding boxes of traffic management objects using the plurality of image frames including the 2D bounding boxes, and the respective position and orientation data;
for each localized center of a 3D bounding box of a traffic management object, calculating an extent and orientation of the 3D bounding box based on image frames including the 2D bounding box of the traffic management object;
for each 3D bounding box of a traffic management object, projecting the 3D bounding box on image frames associated with the traffic management object;
generating a plurality of 2D image cutouts of traffic management objects based on the projected 3D bounding boxes; and
training at least one model to classify traffic management objects in the plurality of 2D image cutouts.

2. The method of claim 1, wherein the 2D bounding boxes are obtained using an image detector neural network, the method further comprising detecting a confidence level of detected 2D bounding boxes and using image frames with 2D bounding boxes with a confidence level above a threshold to localize the centers of 3D bounding boxes of traffic management objects.

3. The method of claim 2, wherein said localizing centers of 3D bounding boxes of traffic management objects includes, for each image frame including a 2D bounding box of a traffic management object, casting a center line from a camera position related to the image frame to a center of the 2D bounding box in the image frame, to generate a plurality of center lines for the plurality of image frames.

4. The method according to claim 3, wherein said localizing centers of 3D bounding boxes of traffic management objects further includes identifying sets of center lines in the plurality of center lines, which approach each other closer than a pre-determined distance, generating a plurality of candidate points by iterating over each pair of center lines in each set to determine a candidate point closest to the respective pair of center lines, clustering the plurality of candidate points to form clusters, and calculating a center of a 3D bounding box of a traffic management object using the candidate points of each cluster.

5. The method according to any one of the preceding claims, wherein said calculating of an extent of the 3D bounding box of a traffic management object includes calculating a plurality of cross sections by, for each image frame including a 2D bounding box of the traffic management object, casting lines from a camera position related to the image frame towards corners of the 2D bounding box of the traffic management object, and calculating intersections of the lines with a plane at the center of the 3D bounding box, which is parallel to the vertical axis and perpendicular to a horizontal component of a line of sight vector, to calculate a cross section, and using an average size or a maximum size of the plurality of cross sections to estimate the extent of the 3D bounding box.

6. The method according to any one of the preceding claims, further comprising setting a predefined value for a depth or the same value for width and depth of an extent of a 3D bounding box.

7. The method according to any one of the preceding claims, wherein said calculating an orientation of the 3D bounding box of a traffic management object includes identifying a reference frame in image frames including a 2D bounding box of the traffic management object, wherein the reference frame has a position at a predefined distance to the traffic management object, determining a moving direction at the position of the reference frame, and calculating the orientation of the 3D bounding box to be oriented opposite to the moving direction.

8. The method according to any one of the claims 1 to 6, wherein said calculating an orientation of the 3D bounding box of a traffic management object includes identifying a reference frame with a 2D bounding box of the traffic management object with a maximum width, and setting the orientation to an opposite direction of a horizontal component of a line of sight vector of traffic management object according to the reference frame.

9. The method according to any one of the preceding claims, further comprising training a first model to classify a state of traffic management objects in the plurality of 2D image cutouts, wherein the state includes one or more of a color and an occlusion level.

10. The method according to any one of the claims 1 to 9, further comprising using the first model to infer a state of a traffic management object based on one or more image frames associated with the traffic management object, including, for an image frame of the one or more image frames, conducting a majority vote on a state inferred for a number of preceding and succeeding image frames of the image frame to determine the state of the traffic management object.

11. The method according to any one of the preceding claims, the method further comprising, obtaining a number of 2D image cutouts for each traffic management object and training a second model to classify a mask type of traffic management objects using the number of 2D image cutouts.

12. The method according to any one of the preceding claims, wherein the traffic management object is a dynamic or static traffic management object, preferably including one or more of a traffic sign, a traffic light, and a dynamic message sign.

13. The method according to any one of the preceding claims, further comprising providing the 3D bounding boxes in a map.

14. The method according to any one of the preceding claims, further comprising generating a training dataset including the 3D bounding boxes of the traffic management objects, preferably including one or more of a state, an occlusion and a mask type of each traffic management object.

15. A method of generating a training dataset, wherein the training dataset is generated based on 3D bounding boxes of traffic management objects, wherein the training dataset is obtained by performing a method according to any one of the preceding claims.

16. A device, comprising
storage configured to store image data; and
a processor, configured to access the storage and perform a method according to any one of the claims 1 to 15.
